# EUROPÄISCHE PATENTSCHRIFT

(11) **EP 0 811 420 B1**
(45) Veröffentlichungstag und Bekanntmachung des Hinweises auf die Patenterteilung: **02.01.2004**
(21) Anmeldenummer: 97108503.0
(22) Anmeldetag: 27.05.1997
(51) Int. Cl.: B01D 69/12, B01D 67/00, B01D 71/78, B01D 61/36

(54) **Komposit-Membran für die selektive Organika-Trennung mittels Pervaporation**
Composite membrane for selective separation of organic substances by pervaporation
Membrane composite pour la séparation selective de substances organiques par pervaporation

(30) Priorität: 07.06.1996 DE 19622959
(43) Veröffentlichungstag der Anmeldung: 10.12.1997
(73) Patentinhaber: GKSS-Forschungszentrum Geesthacht GmbH, 21502 Geesthacht (DE)
(72) Erfinder: Schwarz, Hans-Hartmut, Dr., 14558 Bergholz-Rehbrücke (DE); Apostel, Regine, 14532 Kleinmachnow (DE); Ulbricht, Mathias, Dr., 10245 Berlin (DE)
(74) Vertreter: Niedmers, Ole, Dipl.-Phys.

(56) Entgegenhaltungen:
- GB-A- 2 124 973
- US-A- 5 209 849
- PATENT ABSTRACTS OF JAPAN vol. 14, no. 232 (C-0719), 17.Mai 1990 & JP 02 059029 A (TOSOH CORP), 28.Februar 1990,

## Beschreibung

Die Erfindung betrifft eine Komposit-Membran für die pervaporative Trennung organischer Gemische aus einer polymeren, eine Porenstruktur besitzenden Trägermembran und einer darauf aufgebrachten polymeren Trennschicht, wobei die Trennschicht in Gegenwart eines Photoinitiators durch UV-Anregung photoinitiierte Pfropfpolymerisation aufgebracht wird, indem nach der UV-Anregung der Membranoberfläche Polymerradikale erzeugt werden, ein Verfahren zur Herstellung dieser Kömposit-Membran für die pervaporative Trennung organischer Gemische aus einer polymeren, eine Porenstruktur besitzenden Trägermembran und einer darauf aufgebrachten Trennschicht und deren Verwendung zur selektiven Organika-Abtrennung mittels Pervaporation.

Aus der WO-A-93 25300 ist eine Kompositmembran bekannt, die eine dünne Trennschicht auf der Oberfläche einer dortigen Trägermembran aufweist. Dort wird mittels UV-Lichts, das unter einem spitzen Einfallswinkel auf die Oberfläche geleitet wird, durch die dadurch erfolgte UV-Anregung ein Eindringen des die Trennschicht bildenden Materials in die Porenstruktur des Trägers verhindert werden. D.h., daß das dortige Monomer oder das Gemisch aus Monomeren nachfolgend polymerisiert wird und eine dünne Schicht oder ein dünner Film auf der Oberfläche des mikroporösen Trägers durch unterschiedliche Techniken ausgebildet wird, nämlich durch das sogenannte "Drop-" oder "Dip-Coating". Die Poren des mikroporösen Trägers werden dabei selbst nicht gefüllt.

Häufig können flüssige Stoffgemische nur schwierig destillativ getrennt werden, wie das beispielsweise bei Azeotropen der Fall ist. In diesem Fall stellt die Pervaporation (Verdampfen durch eine Membran) eine Alternative dar. Für eine derartige Pervaporation werden dichte Membranen benötigt, die nach dem Lösungs-Diffusionsmechanismus funktionieren. Dabei bestimmt der chemische Charakter der trennaktiven Schicht, welche Art von Komponenten bevorzugt permeiert, da sich der Trennmechanismus über eine Sorption-Diffusion-Desorption vollzieht.

In der Vergangenheit stand die Entwicklung hydrophiler Membranen im Vordergrund, die zur Entwässerung von Organika eingesetzt werden können. In jüngster Zeit besteht jedoch ein immer größer werdendes Bedürfnis danach, rein organische Gemische mit Hilfe von Pervaporationsmembranen trennen zu können.

Organophile Membranen wurden aus einer Vielzahl von Polymeren und modifizierten Polymeren hergestellt. Eine umfassende Übersicht über das Verhalten vieler Polymermembranen in Pervaporationsprozessen geben J. Neel in R.K.M. Huang: Pervaporation Membrane Separation Processes, Elsevier 1991, Kap. 1; bzw. R.D. Noble und S.A. Stern in: Membrane Separations Technology; Elsevier 1995, Kap. 5. Organika-selektive Membranschichten können auf die verschiedensten Weisen hergestellt werden. Dazu zählen beispielsweise:

### 1. Konventionelle Membranpräparation (Filmbildung)

Hierzu zählen homogene Filme aus Spezialpolymeren oder Copolymeren bzw. Polymerblends (europäische Patentanmeldung 92 117 467.8). Ferner können heterogene und mehrphasige Polymerstrukturen, erhalten durch Block-Copolymere, Pfropfpolymere, Emulsionspolymerisate oder Polymervernetzung, eingesetzt werden. Dazu zählen ferner Filme mit modifizierter Oberfläche und Mehrschichtstrukturen.

### 2. Komposit-Strukturen durch Polymerbeschichtung poröser Support-Membranen

Hierzu zählen Sandwich-Kombinationen (Laminate) von poröser Membran mit separat formierten polymeren Trennschichten (beispielsweise DD-A-290 589), das Dip- oder Spin-Goating auf geeigneter Support-Membran und das (Pre)polymer-Curing auf/in einer Support-Membran.

### 3. In situ-Formierung von Polymer und Film auf einer Support-Membran

Dazu gehören Grenzflächenreaktionen und Dünnschichtpolymerisationen (WO-A-93/25300), Plasmapolymerschichten auf poröser Support-Membran (DE-A-42 34 521) und Pfropfpolymerisation zur in situ-Erzeugung der polymeren Trennschicht auf poröser Support-Membran ("pore filling").

Trotz der Vielfalt der oben aufgeführten Herstellungsmöglichkeiten resultieren spezielle Probleme und Schwierigkeiten bei der Anwendung in der Praxis. So ist generell das Problem der Einstellung von Sorption (Löslichkeit), Diffusion und Desorption immer ein Balanceakt hinsichtlich der notwendigen Wechselwirkungen zwischen Membranpolymer und Permeand. Weiterhin bereitet die Präparation von defektfreien und stabilen dünnen Trennfilmen, die für eine Kombination von hoher Permeabilität und Selektivität essentiell sind, große Schwierigkeiten. Bisherige Membranherstellungsverfahren nutzten beispielsweise bereits auch schon die Pfropfpolymerisation zur reaktiven Kombination von polymerer Matrix- und Trennphase (z.B. F. Sun et al., J. Membr. Sci. 99 (1995) 273, 103 (1995) 271). Dieses bekannte Verfahren ist jedoch auf die Präparation von separaten homogenen Trennfilmen beschränkt. Auch wurde bereits durch Vernetzung versucht, den Quellungsgrad des Polymers zu optimieren und damit auch die notwendige Resistenz gegenüber einem lösenden Angriff der organischen Medien zu schaffen. Auch dieser bekannte Ansatz beschränkt sich auf homogene Trennschichten.

Ferner ist es aus der DE-A-33 25 412 bekannt, u.a. Acrylmonomere zu relativ dünnen Filmen zu photopolymerisieren. Dies führte jedoch zu porösen Membranen.

Bei allen zuletzt geschilderten Varianten mit speziellen, separat präparierten Trennfilmen ergaben sich wegen der relativ großen Dicke von mehr als 5 pm nur geringe Stoffstromdichten.

Es ist auch schon versucht worden, poröse Support-Membranen mit Polymeren zu beschichten. Dabei besteht die Gefahr des Eindringens des aufzubringenden Polymers in die Poren der Unterstruktur, womit plötzlich auch das Support-Material seinen Beitrag zum Transportverhalten und Trenneffekt (G.H. Koops et al., J. Membr. Sci. 81 (1993) 57) leistet.

Im Plasma erzeugte Polymerschichten weisen oft eine undefinierte chemische Struktur auf. Die Auswahl der chemischen Zusammensetzung der Trennschicht ist begrenzt. Veränderungen an der Support-Porenstruktur durch Abbau infolge der Plasmaeinwirkungen können ebenfalls nicht ausgeschlossen werden.

Es sind auch bereits Membranherstellungsverfahren beschrieben worden, bei denen eine photoinitiierte Polymerradikalbildung bzw. deren Umwandlung in Poly-merperoxide mit nachgelagerter thermischer Zersetzung zur Initiierung von heterogenen Pfropfpolymersationen eingesetzt wurden, man vergleiche M. Ulbricht et al., J. Appl. Polym. Sci. 55 (1995) 1707; US-A-5 209 849. Mit diesem bekannten Verfahren können jedoch keine stabilen, defektfreien Dünnfilm-Komposit-Membranen hergestellt werden.

Aufgabe der vorliegenden Erfindung ist es, eine hochleistungsfähige und medienstabile Ktimposit-Membran für die pervaporative Trennung organischer Gemische bereitzustellen.

Gelöst wird diese Aufgabe dadurch, daß
a) die Oberfläche der Trägermembran mit dem Photoinitiator beschichtet wird, der nach der UV-Anregung an der Oberfläche der Trägermembran die Polymerradikale erzeugen kann,
b) auf der Trägermembran eine Trennschicht bildende Pfropfpolymerphase ausgebildet wird, indem entweder
   I) die beschichtete Trägermembran in Gegenwart eines ungesättigten Monomeren oder Monomergemisches UV-belichtet wird oder
   II) die beschichtete Trägermembran in einer Luft- oder Stickstoffatmosphäre UV-belichtet wird und im Anschluß daran ein Monomer oder ein Monomerengemisch durch thermisch induzierte Reaktion aufgepfropft wird, und
c) die erhaltene Membran zur Entfernung von nicht umgesetztem Monomer und Photoinitiator sowie der löslichen Homo- und Copolymere bzw. Photoinitiator-Folgeprodukte extrahiert wird.

Ein wesentlicher Aspekt der erfindungsgemäßen Komposit-Membran besteht darin, daß die trennaktive Schicht bzw. Trennschicht unmittelbar auf der Oberfläche der Trägermembran bzw. Support-Membran reaktiv durch eine heterogene Pfropfpolymerisation aufgebracht und dadurch verankert wird. Durch die Wahl geeigneter Beschichtungs- und Modifizierungsbedingungen wird der Polymerabbau an der Support-Membran minimiert; die ursprüngliche Porenstruktur bleibt erhalten.

Als Trägermembran bzw. Support-Membran können dabei per se bekannte Membranen eingesetzt werden. Es handelt sich dabei vorzugsweise um asymmetrische Polymermembranen und insbesondere asymmetrische Ultrafiltrationsmembranen.

Die erfindungsgemäße Membran ist vorzugsweise nach einem Verfahren erhältlich, das aus den folgenden wesentlichen Schritten besteht:
a) Oberflächenbeschichtung der Trägermembran mit einem Photoinitiator, der nach UV-Anregung (durch H-Abstraktion und somit im wesentlichen ohne Matrixpolymer-Kettenspaltung) an der Membranoberfläche Polymerradikale erzeugen kann.
b) UV-Belichtung der beschichteten Membran entweder (I) in Gegenwart eines ungesättigten Monomeren oder Monomerengemisches oder (II) erst in Luft- oder Stickstoffatmosphäre (Bildung von Membranpolymer-Peroxiden) mit anschließender thermisch induzierter Reaktion mit einem ungesättigten Monomeren oder Monomerengemisch; jeweils unter Bildung einer Pfropfpolymerphase, die als polymere Trennschicht fungiert.
c) Extraktion von nicht-umgesetztem Monomer und Photoinitiator sowie der löslichen Homo- oder Copolymere bzw. Photoinitiator-Folgeprodukte. In der Stufe b) erfolgte die UV-Belichtung vorzugsweise selektiv, so daß im wesentlichen nur der Photoinitiator angeregt wird.

Die Beschichtung mit dem Photoinitiator in Stufe a) kann aus einer Lösung in einem Nichtlösungsmittel für das Membranpolymer vorgenommen werden (Dip-Coating bzw. Imprägnieren); sie kann aber gegebenenfalls auch ohne zusätzlichen Verfahrensschritt direkt vor der in Stufe (b) beschriebenen Pfropfpolymerisation erfolgen, indem der Photoinitiator aus einer Mischung aus Initiator/-Monomer bzw. Monomergemisch (ggfs. in einem Lösungsmittel gelöst) an der Membranoberfläche absorbiert wird. Die Reaktion mit dem Monomer kann dabei nicht nur aus einer fluiden Phase (das Monomer ist in einem Lösungsmittel gelöst), sondern auch aus der Gasphase realisiert werden.

Die erfindungsgemäße Komposit-Membran ist somit nach einem chemisch definierten Modifizierungsverfahren erhältlich, bei dem ein einheitliches Prinzip (Pfropfpolymerisation) zur Anwendung gebracht wird. Die trennaktive Schicht bzw. die Trennschicht besitzt eine minimale Dicke und wird durch Verknüpfung mit der dichten Primärschicht der als Support genutzten Membran, vorzugsweise asymmetrischen Ultrafiltrationsmembran, stabilisiert.

Die Trennschicht stellt eine dünne, chemisch definierte, jedoch variierbare und an das jeweilige Pervaporationsproblem anpaßbare trennaktive Schicht dar, indem die Monomerfunktionalität entsprechend ausgewählt wird. Mit anderen Worten, durch Wahl des eingesetzten Monomers und der zur Anwendung gebrachten funktionellen Gruppen kann die trennaktive Schicht variiert und an das jeweilige Pervaporationstrennproblem angepaßt werden. Natürlich können nur solche Monomere bzw. Monomerengemische zur Anwendung gebracht werden, die zu einer Pfropfpolymerisation auf die polymere Trägermembran in der Lage sind. Derartige Monomere sind dem Fachmann jedoch bekannt.

Als Trägermembran werden vorzugsweise asymmetrische Ultrafiltrationsmembranen, vorzugsweise aus Polyacrylnitril (PAN) eingesetzt werden. Durch eine entsprechende Monomerauswahl für die trennaktive Schicht läßt sich das Hydrophobie-Hydrophilie-Verhältnis beliebig einstellen.

Gegenstand der Erfindung ist auch ein Verfahren zur Herstellung einer Komposit-Membran der beschriebenen Art. Das erfindungsgemäße Verfahren kann problemlos zur Herstellung von größeren Membranflächen und für eine kontinuierliche Herstellung von Komposit-Membranen eingesetzt werden. Zudem gestattet das erfindungsgemäße Verfahren eine schonende (in situ) Vernetzung der trennaktiven Schicht. Zudem können definierte Mehrschichtstrukturen aufgebaut werden, indem eine mehrmalige, aufeinanderfolgende Pfropfpolymerisation erfolgt.

Die Erfindung wird im folgenden anhand der Beispiele näher beschrieben, welche die Herstellung der erfindungsgemäßen Komposit-Membran detaillierter erläutern.

### BEISPIEL 1

### Herstellung einer PAN-g-P(MePEGMA200)-Komposit-Membran durch simultane Photo-Pfropfpolymerisation

Eine PAN-UF-Membran (Typ "TV2"; d = 75 mm) wird unter Schütteln für 16 h mit einer 100 mM Lösung von Benzophenon (BP) in Methanol equilibriert. Die Membran wird aus der Lösung entnommen und zwischen Filterpapier getrocknet; danach erfolgt im Vakuumtrockenschrank ein Tempern für 1 h bei 40°C und 1 Torr. Danach wird die Membran in einer Petrischale (d = 80 mm) im mit Stickstoff gespülten Reaktor plaziert. Eine Lösung (20 ml) von Polyethylenglykolmonomethylether-methacrylat (MePEGMA200; Produkt von Polysciences Europe GmbH; Eppelheim; c = 50 g/l) in mit Benzophenon gesättigtem Wasser wird mittels Stickstoffspülung entgast und dann in die Petrischale gefüllt. Die Membran wird mit einer Halterung auf dem Boden der Petrischale fixiert (Schichtdicke der Monomerlösung über der Membran, d = 3 mm). Danach wird der Reaktor verschlossen und für mindestens eine weitere 1/2 h mit Stickstoff gespült. Anschließend erfolgt - weiterhin unter Stickstoffspülung - für 2 h die UV-Belichtung (HBO 350 DeepUV) durch ein Glasfenster (UV-Filter; λ > 300 nm; ca. 3 mW/cm²) im Reaktor, nach weiteren 30 min wird die Membran aus der Reaktionslösung entnommen und anschließend vollständig (wenn notwendig in Soxhlet) mit Wasser bzw. Methanol oder Aceton extrahiert. Die Bestimmung des Modifizierungsgrades erfolgt gravimetrisch; die Oberflächenstruktur der Komposit-Membran kann mit ATR-IR-Spektroskopie charakterisiert werden.

Diese erfindungsgemäße Komposit-Membran wird vorzugsweise zur Alkoholabtrennung aus Aliphaten oder Ethern mittels Pervaporation eingesetzt.

### BEISPIEL 2

### Alternative Herstellung einer PAN-g-P(MePEGMA200)-Komposit-Membran durch sequentielle photoinitiierte Pfropfpolymerisation

Eine PAN-UF-Membran wird wie im Beispiel 1 beschrieben mit BP beschichtet. Dann wird die Membran im mit Stickstoff gespülten Reaktor plaziert, der Reaktor verschlossen und für mindestens eine weitere 1/2 h mit Stickstoff gespült. Anschließend erfolgt - weiterhin unter Stickstoffspülung - für 30 min die UV-Belichtung wie im Beispiel 1 beschrieben; dann wird die Membran zwischen 10 und 30 min bei Raumtemperatur Luftsauerstoff ausgesetzt. Anschließend wird die Membran in eine mittels Stickstoffspülung von Sauerstoff befreite und auf 50°C temperierte Lösung (100 ml) von MePEGMA200 (c=50 g/l) in Wasser eingebracht. Das Reaktionsgefäß wird dicht verschlossen, und es erfolgt für 2 h bei 50°C unter Stickstoffspülung die thermisch induzierte Pfropfpolymerisation. Dann wird die Membran aus der Reaktionslösung entnommen und anschließend wie unter a) beschrieben gründlich extrahiert.

### BEISPIEL 3

### Herstellung modifizierter Membranen unter Modifizierung des unter Beispiel 1 und 2 beschriebenen Verfahrens der in den Beispielen 1 und 2 hergestellten Membranen

a) Es wurde wie in den Beispielen 1 oder 2 beschrieben vorgegangen, wobei jedoch eine PAN-UF-Membran mit einer anderen Porenstruktur, beispielsweise PAN "TV3", eingesetzt wurde.
b) Es wurde wie in den Beispielen 1 und 2 sowie oben unter a) beschrieben vorgegangen, wobei jedoch andere hydrophile Monomere, Makromere bzw. Polymere eingesetzt und die Monomerkonzentration und Belichtungsdauer zur Realisierung einer Lösungspolymerisation jeweils angepaßt wurden, man vergleiche beispielsweise Tabelle 1.
   Wasser ist dabei das bevorzugte Lösungsmittel für hydrophile Monomere wegen der hohen Oberflächen- und geringen Lösungskonzentration des Photoinitiators (beispielsweise Benzophenon) sowie der geringen H-Donorfähigkeit (geringe Radikalkettentransfer-Reaktionen).
c) Es wurde wie oben unter b) beschrieben vorgegangen, wobei jedoch Mischungen hydrophiler Monomere, Makromere, Prepolymere bzw. multifunktioneller Vernetzer-Monomere verwendet wurden (man vergleiche Tabelle 1).
d) Es wurde wie oben unter b) oder c) beschrieben vorgegangen, wobei jedoch die Monomerkonzentration variiert wurde (beispielsweise zwischen 5 und 200 g/l; man vergleiche Tabelle 1).
e) Es wurde wie oben unter b) oder c) beschrieben vorgegangen, wobei jedoch die Nachreaktionsdauer beispielsweise zwischen 5 min und 24 h variiert wurde.
f) Es wurde wie oben unter b) bis e) vorgegangen, wobei jedoch die Temperatur während der Belichtung und/oder der Nachreaktion variiert wurde, beispielsweise zwischen 25 und 80°C.
g) Es wurde wie oben im Beispiel 1 sowie oben unter a) ff. beschrieben vorgegangen, wobei jedoch auf das Dip-Coating mit Photoinitiator verzichtet wurde. Es erfolgte eine Adsorption des Photoinitiators aus einer Monomer-Photoinitiator-Lösung bzw. -Mischung (beispielsweise während der Stickstoffspülung vor der Belichtung).
h) Es wurde wie oben im Beispiel 1 ff. beschrieben vorgegangen, wobei jedoch ein Trennschicht-selektives Dip-Coating der mit Wasser gequollenen UV-Membran mit dem Photoinitiator aus einer Lösung in einem mit Wasser nicht/kaum mischbaren Lösungsmittel (beispielsweise Chloroform) durchgeführt wurde.
i) Es wurde wie oben im Beispiel 1 ff. beschrieben vorgegangen, wobei jedoch andere Photoinitiatoren bzw. Inititator/Coinitiator/Regulatur-Systeme (beispielsweise Benzophenoncarbonsäure, Eosin, Benzophenon oder Eosin im Gemisch mit Amin, Benzophenon oder Eosin im Gemisch mit Thiol) eingesetzt wurden.
j) Es wurde wie oben im Beispiel 1 ff. beschrieben vorgegangen, wobei jedoch die UV-Belichtung (HBO 350 DeepUV) durch ein Quarzfenster (λ > 220 nm); durchgeführt wurde, man vergleiche Tabelle 1.
k) Es wurde wie oben im Beispiel 1 ff. beschrieben vorgegangen, wobei jedoch das Monomer in organischen Lösungsmitteln bzw. Lösungsmittelgemischen mit Wasser (beispielsweise Acetonitril, Aceton, Methanol) vorlag.
l) Es wurde wie oben im Beispiel 1 ff. beschrieben vorgegangen, wobei jedoch das Monomer in wäßriger Suspension (beispielsweise stabilisiert durch SDS) eingesetzt wurde.
m) Es wurde wie oben im Beispiel 1 ff. beschrieben vorgegangen, wobei jedoch eine Support-Membran aus einem anderen Polymermaterial (beispielsweise Polysulfon, Polypropylen) eingesetzt wurde.
n) Es wurde wie oben im Beispiel 2 ff. beschrieben vorgegangen, wobei jedoch kein Photoinitiator-Coating, jedoch eine UV-Belichtung (HBO 350 DeepUV) durch ein Quarzfenster (λ > 220 nm) durchgeführt wurde; es erfolgte somit eine sequentielle Modifizierung nach direkter Membranpolymeranregung mit anschließender Peroxidbildung (man vergleiche Tabelle 2).

### BEISPIEL 4

Pervaporationstests; mit den gemäß den Beispielen 1 bis 3 hergestellten, durch photochemische Modifizierung erzeugten erfindungsgemäßen Membranen wurden verschiedene Pervaporationstests durchgeführt. Als Ausgangsmischung diente Methanol/Cyclohexan; die Arbeitstemperatur betrug 50°C. Das Permeat wurde in einer Kühlfalle durch Ausfrieren mit flüssigem Stickstoff gesammelt; die Zusammensetzung des Permeats wurde gaschromatographisch bestimmt.

Für verschiedene gemäß dem Beispiel 1 bzw. den im Beispiel 3 beschriebenen Varianten des Beispiels 1 hergestellte Membranen sind in der nachstehenden Tabelle 1 übersichtsartig die Ergebnisse zusammengefaßt. Dabei geben die ersten vier Spalten nach der Membrannumerierung Auskunft über die Präparationsbedingungen. In den Spalten 5 und 6 finden sich Daten für die allgemeine Charakterisierung, den Modifizierungsgrad und die unter Ultrafiltrationsbedingungen resultierende Methanolpermeabilität. In den letzten drei Spalten sind die Pervaporationseigenschaften angegeben. Diese Daten beziehen sich auf eine Feedkonzentration von 3,2 % Methanol in Cyclohexan, um alle unterschiedlichen Membranen vergleichen zu können.

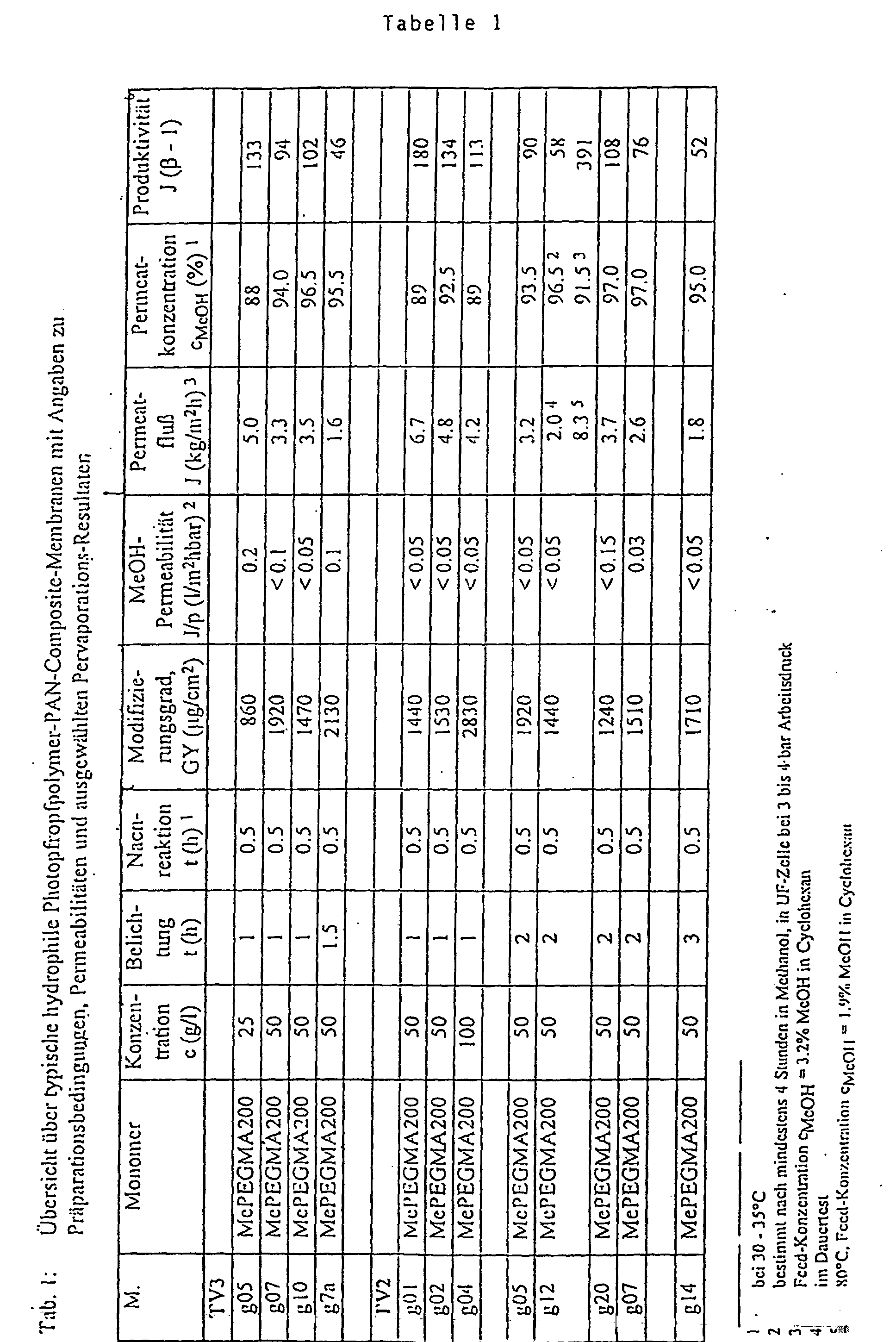

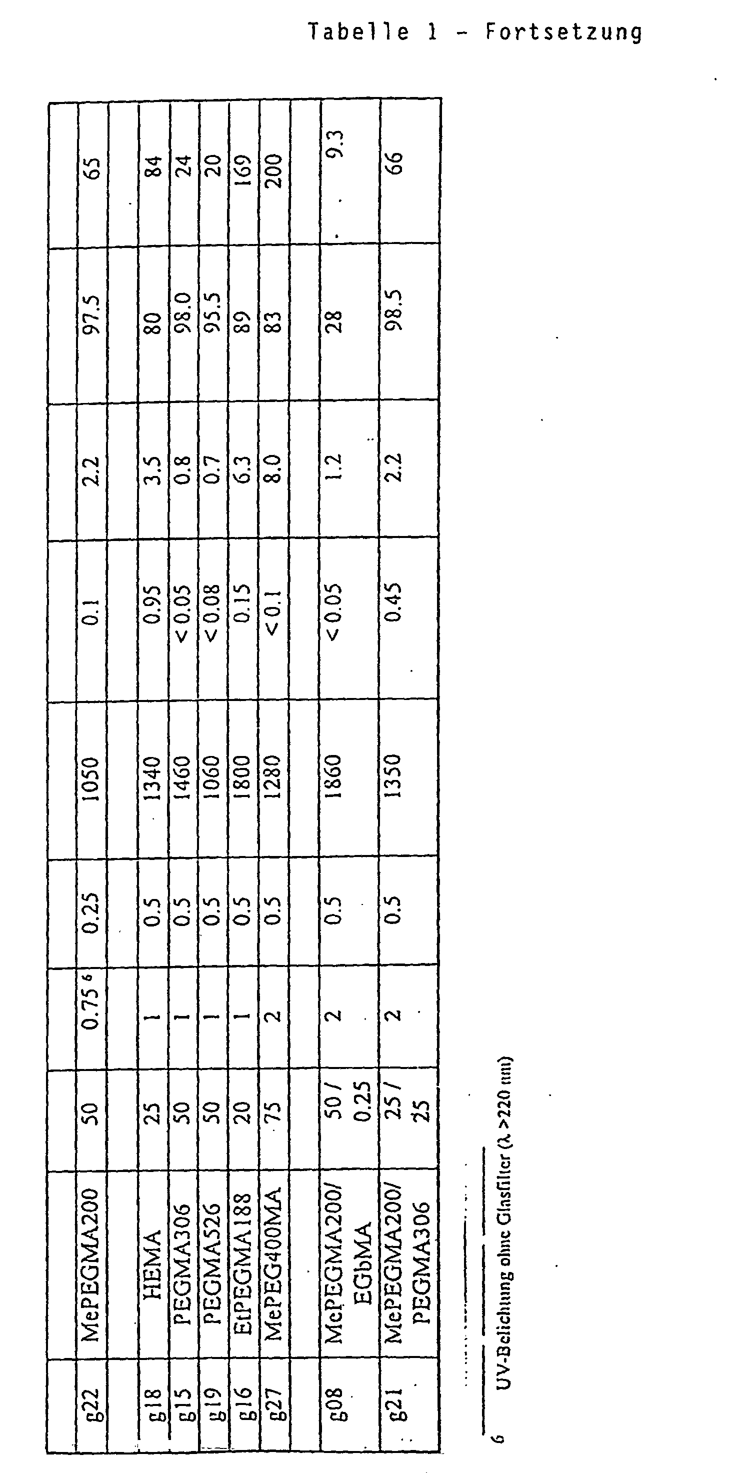

Auch für eine Ausgangsmischung aus Methanol und MTBE wurde die Membranleistung im Pervaporationsexperiment bestimmt. Für die Membran TV2-g07 ist die Abhängigkeit von Fluß und Permeatkonzentration von der Feedkonzentration in der nachfolgenden Tabelle 2 wiedergegeben.

**TABELLE 2**

| Methanolkonzentration | | Stoffstromdichte J [kg/hm²] | | |
|---|---|---|---|---|
| Feed | Permeat | gesamt | Methanol | MTBE* |
| 20,1 | 91,6 | 1,49 | 1,36 | 0,13 |
| 18,85 | 90,75 | 1,46 | 1,32 | 0,14 |
| 17,3 | 90,8 | 1,39 | 1,26 | 0,13 |
| 11,9 | 89,25 | 1,08 | 0,96 | 0,12 |
| 6,95 | 84,9 | 0,75 | 0,64 | 0,11 |

| | | | | |
|---|---|---|---|---|
| *MTBE = 2-Methoxy-2-methylpropan | | | | |

Auch für zwei gemäß dem Beispiel 2 hergestellte, durch sequentielle photoinitiierte Pfropfpolymerisationen erhaltene Membranen wurden Pervaporationstests durchgeführt. Diese Membranen haben analoge Eigenschaften, wie dies aus der nachstehenden Tabelle 3 hervorgeht.

**TABELLE 3**

| Probenbezeichnung | Monomer(e)¹ | Reaktionsbedingungen | Modifizierungsgrad (mg/cm²) | Methanol-Permeabilität J(l/m²h bar)² |
|---|---|---|---|---|
| tv3-g01 | MePEG200MA | 50 g/l 2 h « 50°C | 1,47 | 0,19 |
| | | | | |
| tv3-g02 | MePEG200MA/EGbMA | 50 g/l/ 0,25 g/l 2 h « 50°C | 1,21 | 0,47 |

| | | | | |
|---|---|---|---|---|
| 1) MePEG200MA - Methoxy-(polyethylenglykol)-methacrylat (MW.PEG ca. 200 g/mol) EGbMA .. Ethylenglykol-bis-methacrylat | | | | |
| 2) bestimmt in UF-Zelle (dmembr. = 62 mm), nach Equilbrieren in Methanol (min 12 h); p = 0,5 MPa | | | | |

## Patentansprüche

1. Komposit-Membran für die pervaporative Trennung organischer Gemische aus einer polymeren, eine Porenstruktur besitzenden Trägermembran und einer darauf aufgebrachten polymeren Trennschicht, wobei die Trennschicht in Gegenwart éines Photoinitiators durch UV-Anregung photoinitiierte Pfropfpolymerisation aufgebracht wird, indem nach der UV-Anregung der Membranoberfläche Polymerradikale erzeugt werden, dadurch erhältlich, daß
a) die Oberfläche der Trägermembran mit dem Photoinitiator beschichtet wird, der nach der UV-Anregung an der Oberfläche der Trägermembran die Polymerradikale erzeugen kann,
b) auf der Trägermembran eine die Trennschicht bildende Pfropfpolymerphase ausgebildet wird, indem entweder
I) die beschichtete Trägermembran in Gegenwart eines ungesättigten Monomeren oder Monomergemisches UV-belichtet wird oder
II) die beschichtete Trägermembran in einer Luft- oder Stickstoffatmosphäre UV-belichtet wird und im Anschluß daran ein Monomer oder ein Monomerengemisch durch thermisch induzierte Reaktion aufgepfropft wird, und
c) die erhaltene Membran zur Entfernung von nicht umgesetztem Monomer und Photoinitiator sowie der löslichen Homo- und Copolymere bzw. Photoinitiator-Folgeprodukte extrahiert wird.

2. Komposit-Membran nach Anspruch 1, dadurch erhältlich, daß als Monomer zur Herstellung der aufgepfropften polymeren Trennschicht Polyethylenglykol-monomethylether-methacrylat oder Ethylenglykol-bis-methacrylat eingesetzt wird.

3. Komposit-Membran nach Anspruch 1 oder 2, dadurch erhältlich, daß in Stufe a) die Beschichtung mit dem Photoinitiator aus einer Lösung in einem Nichtlösungsmittel für das Trägermembranpolymer durch Dip-Coating oder Imprägnieren erfolgt.

4. Komposit-Membran nach Anspruch 1 oder 2, dadurch erhältlich, daß die Stufen a) und b) in einem Verfahrensschritt, jedoch nacheinander, durchgeführt werden, indem die Beschichtung mit dem Photoinitiator durch Adsorption aus einem Gemisch aus Initiator und Monomer bzw. Monomerenmischung an der Trägermembranoberfläche erfolgt und sich dann die Pfropfpolymerisation anschließt.

5. Komposit-Membran nach einem der Ansprüche 1 bis 4, dadurch erhältlich, daß die UV-Belichtung selektiv erfolgt, so daß im wesentlichen nur der Photoinitiator angeregt wird.

6. Komposit-Membran nach einem der Ansprüche 1 bis 5, dadurch erhältlich, daß als Photoinitiator Benzophenon eingesetzt wird.

7. Komposit-Membran nach einem der vorhergehenden Ansprüche, **dadurch gekennzeichnet, daß** die Trägermembran eine per se bekannte asymmetrische Ultrafiltrationsmembran ist.

8. Komposit-Membran nach einem der vorhergehenden Ansprüche, **dadurch gekennzeichnet, daß** das Trägermembranpolymer Polyacrylnitril, Polysulfon und Polypropylen ist.

9. Verfahren zur Herstellung einer Komposit-Membran für die pervaporative Trennung organischer Gemische aus einer polymeren, eine Porenstruktur besitzenden Trägermembran und einer darauf aufgebrachten polymeren Trennschicht, **dadurch gekennzeichnet, daß** die in den Ansprüchen 1 bis 6 beschriebenen Schritte durchgeführt werden.

10. Verwendung einer Membran nach einem der Ansprüche 1 bis 8 zur selektiven Organikaabtrennung mittels Pervaporation, insbesondere zur Abtrennung von Alkoholen, z.B. Methanol, aus Kohlenwasserstoffen oder Ethern sowie zur Abtrennung aromatischer Komponenten von aliphatischen Komponenten.

## Claims

1. Composite membrane for the pervaporative separation of organic mixtures, made from a polymeric support membrane having a porous structure and a polymeric separation layer applied thereon, whereby the separation layer is applied in the presence of a photo-initiator by graft polymerisation photo-initiated by UV activation, by generating polymer radicals after the UV activation of the membrane surface, obtainable in that
a) the surface of the support membrane is coated with the photo-initiator that can generate the polymer radicals on the surface of the support membrane after UV activation,
b) a graft polymer phase forming the separation layer is formed on the support membrane by either
I) illuminating the coated support membrane with UV light in the presence of an unsaturated monomer or mixture of monomers, or
II) illuminating the coated support membrane with UV light in an atmosphere of air or nitrogen and thereafter grafting on a monomer or a monomer mixture by thermally induced reaction, and
c) the membrane obtained is extracted to remove unreacted monomer and photo-initiator together with the soluble homo- and co-polymers and/or photo-initiator decay products.

2. Composite membrane according to Claim 1, obtainable by using polyethylene glycol monomethyl ether methacrylate or ethylene glycol bis-methacrylate as the monomer to manufacture the grafted-on polymeric separation layer.

3. Composite membrane according to Claim 1 or 2, obtainable in that, in Stage a), the coating with the photo-initiator takes place from a solution in a nonsolvent for the support membrane polymer by dip-coating or impregnation.

4. Composite membrane according to Claim 1 or 2, obtainable in that Stages a) and b) are carried out in a single process but one after another, in that the coating with the photo-initiator takes place by adsorption onto the support membrane surface from a mixture of initiator and monomer or monomer mixture, and this is then followed by the graft polymerisation.

5. Composite membrane according to one of the Claims 1 to 4, obtainable in that the UV illumination takes place selectively, so that essentially only the photo-initiator is activated.

6. Composite membrane according to one of the Claims 1 to 5, obtainable in that benzophenone is used as the photo-initiator.

7. Composite membrane according to one of the foregoing Claims, **characterized in that** the support membrane is an asymmetrical ultrafiltration membrane that is known *per se.*

8. Composite membrane according to one of the foregoing Claims, **characterized in that** the support membrane polymer is polyacrylonitrile, polysulphone and polypropylene.

9. Process to manufacture a composite membrane for the pervaporative separation of organic mixtures, made from a polymeric support membrane having a porous structure and a polymeric separation layer applied thereon, **characterized in that** the steps described in Claims 1 to 6 are carried out.

10. Use of a membrane according to one of the Claims 1 to 8 for the selective separation of organics by the use of pervaporation, in particular to separate alcohols, e.g. methanol, from hydrocarbons or ethers, as well as to separate aromatic components from aliphatic components.

## Revendications

1. Membrane composite pour la séparation par pervaporation de mélanges organiques, constituée d'une membrane support polymère, possédant une structure de pores, et d'une couche de séparation polymère déposée sur celle-ci, la couche de séparation étant déposée en présence d'un photoinitiateur par polymérisation greffe photoinitiée par excitation UV, en produisant des radicaux polymères après l'excitation UV de la surface de la membrane, pouvant être obtenue en
a) revêtant la surface de la membrane support avec le photoinitiateur qui peut produire les radicaux polymères après l'excitation UV sur la surface de la membrane support,
b) formant sur la membrane support une phase de polymère greffé constituant la couche de séparation en
I) soit irradiant d'UV la membrane support revêtue en présence d'un monomère insaturé ou d'un mélange de monomères
II) soit irradiant d'UV la membrane support revêtue sous une atmosphère d'air ou d'azote et consécutivement, en greffant un monomère ou un mélange de monomères par réaction thermoinduite, et
III) en extrayant la membrane obtenue pour éliminer le monomère non converti et le photoinitiateur ainsi que les homopolymères et copolymères solubles ou produits consécutifs du photoinitiateur.

2. Membrane composite selon la revendication 1, pouvant être obtenue en utilisant comme monomère pour la fabrication de la couche de séparation polymère greffée du polyéthylène glycol - monométhyle éther - méthacrylate ou de l'éthylène glycol-bis-méthacrylate.

3. Membrane composite selon la revendication 1 ou 2, pouvant être obtenue en ce que, à l'étape a), le revêtement avec le photoinitiateur constitué d'une solution dans un non solvant s'effectue par enduction par immersion ou imprégnation pour le polymère de la membrane support.

4. Membrane composite selon la revendication 1 ou 2, pouvant être obtenue en ce que les étapes a) et b) sont réalisées en une étape de procédé, cependant successivement, en effectuant le dépôt du photoinitiateur par adsorption d'un mélange constitué d'initiateur et de monomère ou d'un mélange de monomères sur la surface de la membrane support et en adjoignant ensuite la polymérisation greffe.

5. Membrane composite selon l'une quelconque des revendications 1 à 4, pouvant être obtenue en ce que l'irradiation d'UV s'effectue sélectivement de sorte que seul le photoinitiateur soit sensiblement excité.

6. Membrane composite selon l'une quelconque des revendications 1 à 5, pouvant être obtenue en utilisant du benzophénone comme photoinitiateur.

7. Membrane composite selon l'une quelconque des revendications précédentes, pouvant être obtenue en ce que la membrane support est une membrane d'ultrafiltration asymétrique connue en soi.

8. Membrane composite selon l'une quelconque des revendications précédentes, **caractérisée en ce que** le polymère de la membrane support est le polyacrylnitrile, le polysulfone et le polypropylène.

9. Procédé de fabrication d'une membrane composite pour la séparation par pervaporation de mélanges organiques, constituée d'une membrane support polymère, possédant une structure de pores, et d'une couche de séparation polymère déposée sur celle-ci, **caractérisé en ce que** les étapes décrites dans les revendications 1 à 6 sont réalisées.

10. Utilisation d'une membrane selon l'une quelconque des revendications 1 à 8 pour la séparation sélective des produits organiques au moyen de la pervaporation, en particulier pour la séparation des alcools, par exemple le méthanol, constitués d'hydrocarbures ou d'éthers ainsi que pour la séparation de composants aromatiques des composants aliphatiques.
